# EUROPEAN PATENT APPLICATION

(11) **EP 2 541 350 A2**
(43) Date of publication of application: **02.01.2013**
(21) Application number: 12168491.4
(22) Date of filing: 18.05.2012
(51) Int. Cl.: G05B 19/05, G05B 19/414, G05B 19/416

(54) **Synchronization control**

(30) Priority: 28.06.2011 JP 2011142764
(71) Applicant: Omron Corporation, Kyoto-shi, Kyoto 600-8530 (JP)
(72) Inventor: Hosomi, Shinichi, Kyoto, Kyoto 600-8530 (JP); Shimamura, Junji, Kyoto, Kyoto 600-8530 (JP); Jakunen, Tetsushi, Kyoto, Kyoto 600-8530 (JP)
(74) Representative: Horn Kleimann Waitzhofer

(57) **Abstract**

A synchronization control apparatus enables an impact applied to a driven shaft to be alleviated, and synchronization control to be surely started at a synchronization start position. A user command unit (62) specifies a synchronization start position where a main shaft and a driven shaft start synchronization. A cam curve creating unit (64) creates a cam curve. A detection unit (65) detects position information of the main shaft in each control period. A control unit (66) calculates a velocity command value to the driven shaft in each control period, based on the cam curve and the position information of the main shaft up to the synchronization start position, and calculates the velocity command value to the driven shaft in each control period, based on a gear ratio between the main shaft and the driven shaft after the synchronization start position, and the driven shaft is controlled with the calculated velocity command value.

## Description

### TECHNICAL FIELD

The present invention relates to a synchronization control apparatus, a synchronization control method, a synchronization control program, and a computer-readable recording medium recording the synchronization control program, and particularly to a synchronization control apparatus, a synchronization control method, a synchronization control program, and a computer-readable recording medium recording the synchronization control program, which synchronously operate a main shaft and a driven shaft with an arbitrary gear ratio.

### RELATED ART

A programmable logic controller (hereinafter, referred to as a "PLC") is made up of a plurality of units including, for example, an arithmetic operation unit that executes a user program, an IO (Input Output) unit responsible for signal input from an external switch or an external sensor, and signal output to an external relay or an external actuator, and the like. The PLC executes control operation while giving and receiving data via a PLC system bus and/or a field network in every user program execution cycle among the above-described units.

As control of operation of machinery, equipment and the like, motion control to control a motion of a motor may be included. As a representative example of the above-described motion control, an application that performs positioning of a mechanical mechanism such as a positioning table or robot is assumed.

In a motion controller, synchronization operation and synchronization control means systems in which a main shaft and a driven shaft are operated while maintaining some relationships, and generally include cam operation and gear operation. The cam operation is a system of searching a position (displacement) of the driven shaft corresponding to a position (phase) of the main shaft from a cam table in each control period to decide a command position of the driven shaft. The gear operation is a system of determining the command position of the driven shaft with a value obtained by multiplying a velocity of the main shaft by the gear ratio used as a command velocity of the driven shaft.

Next, the gear operation will be described.
In order to synchronize the driven shaft with the main shaft from a state where the driven shaft stops, a velocity of the driven shaft needs to be changed in steps.

This corresponds to a case where in an automobile of a manual transmission system, if the main shaft is an engine, and the driven shaft is a tire, shift of gear is directly performed without half-clutch. That is, this is the same as a situation where when the clutch is engaged, an unreasonable force is generated in the driven shaft (= tire). In order to alleviate mechanical impact applied to the driven shaft due to such a rapid change in the velocity of the driven shaft, a method of reducing the velocity of the main shaft and a method of starting the operation of the driven shaft before the synchronization start (hereinafter, referred to as "catching-up operation") are considered.

In the method of reducing the velocity of the main shaft, there are problems that a throughput (a number processable per unit time) of the apparatus is reduced, that in CNC (Computerized Numerically Controlled), processing accuracy deteriorates, and the like. Thus, it is important to implement the catching-up operation. As an implementation example, for example, in Japanese Patent Publication No. 3452899, the implementation method by the "catching-up operation" has been disclosed. That is, in the operation method described in Japanese Patent Publication No. 3452899, a straight line or a curved line of acceleration and deceleration is defined, and the driven shaft accelerates and decelerates till a synchronization start position, so that the main shaft and the driven shaft are synchronous after the synchronization start position.

However, in Japanese Patent Publication No. 3452899, during the catching-up operation, the driven shaft operates alone. Thus, there is a problem that when the velocity of the main shaft is changed during the catching-up operation, the synchronization control cannot be started at the synchronization start position.

This is because the problem to be solved in Japanese Patent Publication No. 3452899 is "the alleviation of mechanical impact of the driven shaft at the start time of synchronization", and the velocity change of the main shaft during the catching-up operation is not considered.

In the case where the velocity of the main shaft is minute as in a CNC (Computerized Numerically Controlled) machine tool, even if the main shaft and the driven shaft are not synchronous during the catching-up operation, a big trouble may not occur. However, in a so-called general-purpose motion controller, the velocity of the main shaft may be largely changed. In this case, the synchronization control cannot be started at the synchronization start position.

Therefore, an object of the present invention is to provide a synchronization control apparatus, a synchronization control method, a synchronization control program, and a computer-readable recording medium recording the synchronization control program, which enable an impact applied to a driven shaft to be alleviated, and synchronization control to be surely started at a synchronization start position.

### SUMMARY

In order to solve the above problem, the present invention provides a synchronization control apparatus for executing synchronization control of a main shaft and a driven shaft in each of a plurality of control periods, the synchronization control apparatus comprising:
a specification unit for specifying a synchronization start position where the main shaft and the driven shaft start synchronization;
a cam curve creating unit for creating a cam curve;
a detection unit for detecting position information of the main shaft in each control period; and
a control unit for calculating a velocity command value applied to the driven shaft in each control period up to the synchronization start position, based on the cam curve and the position information of the main shaft, and calculating the velocity command value applied to the driven shaft in each control period after the synchronization start position, based on a gear ratio between the main shaft and the driven shaft,
wherein the control unit is adapted to control the driven shaft with the calculated velocity command value..

Preferably, the cam curve creating unit creates the cam curve in a time period up to the synchronization start position, based on a specified target acceleration, target deceleration, and target velocity.

Moreover, the present invention provides a synchronization control method of executing synchronization control of a main shaft and a driven shaft in each control period, the method including the steps of:
specifying a synchronization start position where the main shaft and the driven shaft start synchronization;
creating a cam curve;
detecting position information of the main shaft in each control period;
calculating a velocity command value applied to the driven shaft in each control period up to the synchronization start position, based on the cam curve and the position information of the main shaft, and calculating the velocity command value applied to the driven shaft in each control period after the synchronization start position, based on a gear ratio between the main shaft and the driven shaft; and
controlling the driven shaft with the calculated velocity command value.

Moreover, the present invention provides a synchronization control program that causes a computer to execute synchronization control of a main shaft and a driven shaft in each a plurality of control periods, the computer executing the steps of:
specifying a synchronization start position where the main shaft and the driven shaft start synchronization;
creating a cam curve,
detecting position information of the main shaft in each control period;
calculating a velocity command value applied to the driven shaft in each control period up to the synchronization start position, based on the cam curve and the position information of the main shaft up to the synchronization start position, and calculating the velocity command value applied to the driven shaft in each control period after the synchronization start position, based on a gear ratio between the main shaft and the driven shaft after the synchronization start position; and
controlling the driven shaft with the calculated velocity command value.

Moreover, the present invention provides a computer-readable recording medium recording a synchronization control program that causes a computer to execute synchronization control of a main shaft and a driven shaft in each of a plurality of control periods, causing the computer to execute the steps of:
specifying a synchronization start position where the main shaft and the driven shaft start synchronization;
creating a cam curve;
detecting position information of the main shaft in each control period;
calculating a velocity command value applied to the driven shaft in each control period up to the synchronization start position, based on the cam curve and the position information of the main shaft up to the synchronization start position, and calculating the velocity command value applied to the driven shaft in each control period after the synchronization start position, based on a gear ratio between the main shaft and the driven shaft after the synchronization start position; and
controlling the driven shaft with the calculated velocity command value.

According to the present invention, the impact applied to the driven shaft can be alleviated, and the synchronization control can be surely started at the synchronization start position.

### BRIEF DESCRIPTION OF THE DRAWINGS

Fig. 1 is a schematic diagram showing a schematic configuration of a PLC system;
Fig. 2 is a schematic diagram showing a hardware configuration of a CPU unit;
Fig. 3 is a schematic diagram showing a software configuration executed in the CPU unit;
Fig. 4 is a diagram showing a configuration of a synchronization control apparatus;
Figs. 5A and 5B are diagrams showing an example of a cam curve;
Fig. 6 is a flowchart showing an operation procedure of synchronization control of a first embodiment;
Fig. 7 is a flowchart showing an operation procedure of synchronization control of a second embodiment; and
Figs. 8A and 8B are diagrams showing an example of a cam curve.

### DETAILED DESCRIPTION

Hereinafter, embodiments of the present invention will be described with reference to the drawings.

### [First embodiment]

An embodiment of the present invention will be described in detail with reference to the drawings. Identical or corresponding units in the figures will be given the same reference numerals, and descriptions thereof will not be repeated.

### <A. System Configuration>

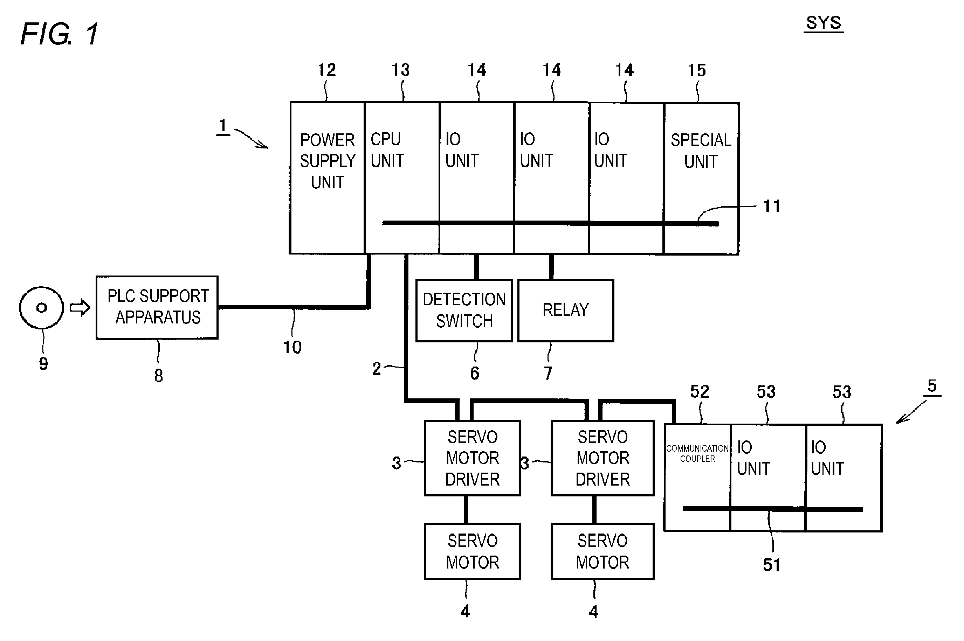

A PLC (Programmable Logic Controller) according to the present embodiment has a motion control function to control a motion of a motor. First, referring to Fig. 1, a system configuration of a PLC 1 according to the present embodiment will be described.

Fig. 1 is a schematic diagram showing a schematic configuration of a PLC system according to the embodiment of the present invention. Referring to Fig. 1, a PLC system SYS includes the PLC 1, and servo motor drivers 3 and a remote IO terminal 5, which are connected to the PLC 1 through a field network 2, and a detection switch 6 and a relay 7 as field devices. Moreover, to the PLC 1 is connected a PLC support apparatus 8 through a connection cable 10 or the like.

The PLC 1 includes a CPU unit 13 that executes main arithmetic operation processing, one or more IO units 14, and a special unit 15. These units are configured so as to be capable of exchanging data through a PLC system bus 11. Moreover, power of a proper voltage is supplied by a power supply unit 12.

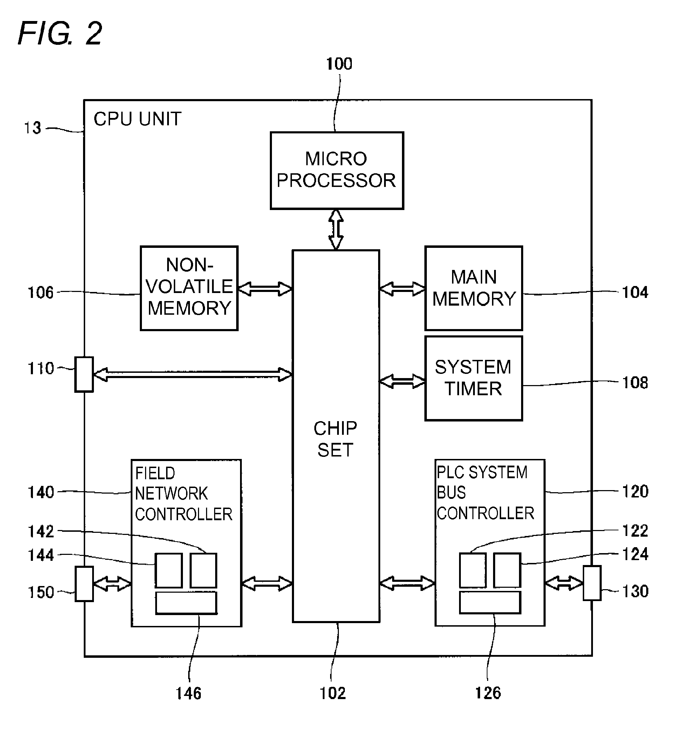

Details of the CPU unit 13 will be described with reference to Fig. 2 later.
Each of the IO units 14 is a unit involved in general input/output processing, and controls input/output of binarized data such as On/Off. In other words, the IO unit 14 collects information of whether a sensor such as the detection switch 6 is in a state where it is detecting some object (On), or in a state where it is not detecting any object (Off). Moreover, the IO unit 14 outputs either of a command to activate an output destination such as the relay 7 and an actuator (On) and a command to inactivate the same (Off).

The special unit 15 has functions that the IO units 14 do not support, such as input/output of analog data, temperature control, and communication by a specific communication method.

The field network 2 transmits various types of data exchanged with the CPU unit 13. As the field network 2, typically, various types of industrial Ethernet (registered trademark) can be used.

While in Fig. 1, the PLC system SYS having both the PLC system bus 11 and the field network 2 is illustrated, a system configuration in which only one of them is mounted can also be employed. For example, all the units may be connected by the field network 2. Alternatively, the servo motor drivers 3 may be directly connected to the PLC system bus 11 without using the field network 2. Furthermore, a communication unit of the field network 2 may be connected to the PLC system bus 11, so that the communication with a device connected to the field network 2 may be performed from the CPU unit 13 via the relevant communication unit.

The servo motor drivers 3 are each connected to the CPU unit 13 through the field network 2, and drive a servo motor 4 in accordance with command values form the CPU unit 13. More specifically, the servo motor driver 3 receives the command values such as a position command value, a velocity command value, and a torque command value from the PLC 1 with a predetermined period. Moreover, the servo motor driver 3 acquires actual measured values according to operation of the servo motor 4, such as a position, a velocity (typically, calculated from a difference between a current position and a last position), and a torque from a detector such as a position sensor (rotary encoder) and a torque sensor connected to a shaft of the servo motor 4. The servo motor driver 3 sets the command values from the CPU unit 13 as target values, and the actual measured values as feedback values to perform feedback control. That is, the servo motor driver 3 adjusts a current to drive the servo motor 4 so that the actual measured values become closer to the target values. The servo motor driver 3 may also be referred to as a servo motor amplifier.

While in Fig. 1, a system example in which the servo motors 4 and the servo motor drivers 3 are combined is shown, another configuration, for example, a system in which pulse motors and pulse motor drivers are combined can also be employed.

To the field network 2 of the PLC system SYS shown in Fig. 1 is further connected the remote IO terminal 5. The remote IO terminal 5 basically performs processing regarding general input/output processing as in the IO units 14. More specifically, the remote IO terminal 5 includes a communication coupler 52 that performs processing involving the data transmission in the field network 2, and one or more IO units 53. These units are configured so as to be capable of mutually exchanging data through a remote IO terminal bus 51.

### <B. Hardware Configuration of CPU Unit>

Next, referring to Fig. 2, a hardware configuration of the CPU unit 13 will be described. Fig. 2 is a schematic diagram showing the hardware configuration of the CPU unit 13 according to the embodiment of the present invention.

Referring to Fig. 2, the CPU unit 13 includes a microprocessor 100, a chip set 102, a main memory 104, a non-volatile memory 106, a system timer 108, a PLC system bus controller 120, a field network controller 140, and a USB connector 110. The chip set 102 and the other components are joined through various buses.

The microprocessor 100 and the chip set 102 are typically configured in accordance with a general-purpose computer architecture. That is, the microprocessor 100 interprets and executes instruction codes sequentially supplied in accordance with an internal clock from the chip set 102. The chip set 102 exchanges internal data with the connected various components, and generates the instruction codes necessary for the microprocessor 100. Furthermore, the chip set 102 has a function of caching data resulting from execution of arithmetic operation processing in the microprocessor 100, and the like.

The CPU unit 13 has the main memory 104 and the non-volatile memory 106 as storage means.

The main memory 104 is a volatile storage area (RAM), and holds various programs to be executed in the microprocessor 100 after power-on of the CPU unit 13. Moreover, the main memory 104 is used as a working memory at the time of execution of the various programs by the microprocessor 100. As the above-described main memory 104, a device such as a DRAM (Dynamic Random Access Memory) and an SRAM (Static Random Access Memory) is used.

On the other hand, the non-volatile memory 106 holds data such as a real-time OS (Operating System), and a system program, a user program, a motion arithmetic operation program, system setting parameters of the PLC 1 in a non-volatile manner. These programs and data are copied to the main memory 104 so as to enable the microprocessor 100 to access them, as needed. As the non-volatile memory 106, a semiconductor memory such as a flash memory can be used. Alternatively, a magnetic recording medium such as a hard disk drive, an optical recording medium such as a DVD-RAM (Digital Versatile Disk Random Access Memory), and the like can also be used.

The system timer 108 generates an interrupt signal every predetermined period to provide to the microprocessor 100. Typically, while the interrupt signal is generated with a plurality of different periods, depending on a specification of hardware, setting can also be made so as to generate the interrupt signal with an arbitrary period in accordance with the OS (Operating System), the BIOS (Basic Input Output System) and the like. The interrupt signal generated by this system timer 108 is utilized to implement control operation in each motion control cycle described later.

The CPU unit 13 has the PLC system bus controller 120 and the field network controller 140 as communication circuits.

The PLC system bus controller 120 controls the exchange of the data through the PLC system bus 11. More specifically, the PLC system bus controller 120 includes a DMA (Dynamic Memory Access) control circuit 122, a PLC system bus control circuit 124, and a buffer memory 126. The PLC system bus controller 120 is internally connected to the PLC system bus 11 through a PLC system bus connector 130.

The buffer memory 126 functions as a transmission buffer of data outputted to another unit through the PLC system bus 11 (hereinafter, also referred to as "output data"), and a reception buffer of data inputted from another unit through the PLC system bus 11 (hereinafter, also referred to as "input data"). The output data created by the arithmetic operation processing of the microprocessor 100 is primitively stored in the main memory 104. The output data to be forwarded to a specific unit is read from the main memory 104, and primarily held in the buffer memory 126. The input data forwarded from another unit, after being primarily held in the buffer memory 126, is transferred to the main memory 104.

The DMA control circuit 122 performs forwarding of the output data from the main memory 104 to the buffer memory 126, and forwarding of the input data from the buffer memory 126 to the main memory 104.

The PLC system bus control circuit 124 performs processing of transmitting the output data of the buffer memory 126 and processing of receiving the input data to store the same in the buffer memory 126 with respect to another unit connected to the PLC system bus 11. Typically, the PLC system bus control circuit 124 provides functions of a physical layer and a data link layer in the PLC system bus 11.

The field network controller 140 controls the exchange of the data through the field network 2. That is, the field network controller 140 controls the transmission of the output data and the reception of the input data in accordance with a standard of the used field network 2. In this manner, the CPU unit 13 according to the present embodiment is connected to each of the server motor drivers 3 as a drive apparatus through the field network 2.

A DMA control circuit 142 performs forwarding of the output data from the main memory 104 to a buffer memory 146, and forwarding of the input data from the buffer memory 146 to the main memory 104.

The field network control circuit 144 performs processing of transmitting the output data of the buffer memory 146 and processing of receiving the input data to store the same in the buffer memory 146 with respect to another unit connected to the field network 2. Typically, the field network control circuit 144 provides functions of a physical layer and a data link layer in the field network 2.

The USB connector 110 is an interface to connect the PLC support apparatus 8 and the CPU unit 13. Typically, a program and the like that are forwarded from the PLC support apparatus 8 and can be executed in the microprocessor 100 of the CPU unit 13 are loaded on the PLC 1 through the USB connector 110.

### <C. Software Configuration of CPU Unit>

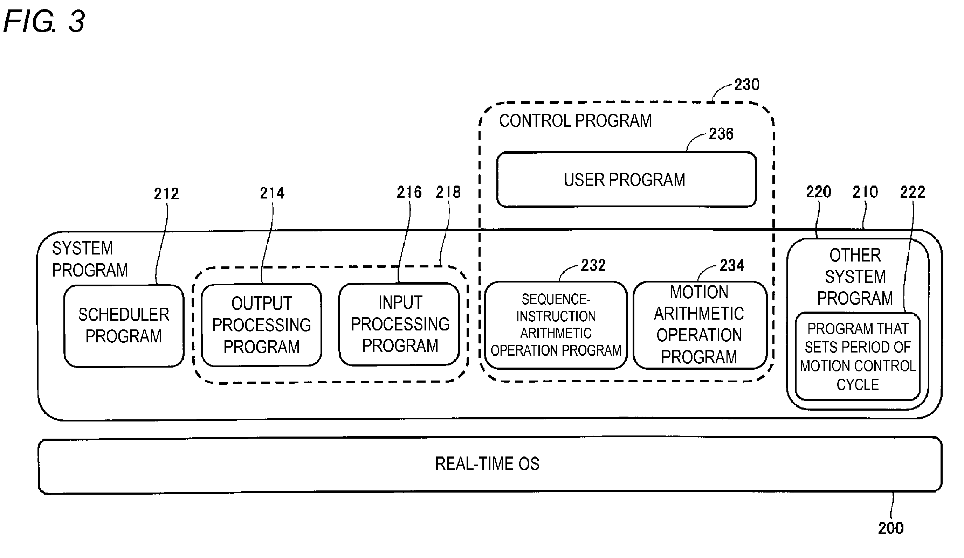

Next, referring to Fig. 3, a software group to provide various functions according to the present embodiment will be described. The instruction codes included in the software are read at proper timing to be executed by the microprocessor 100 of the CPU unit 13.

Fig. 3 is a schematic diagram showing the software configuration executed in the CPU unit 13 according to the embodiment of the present invention. Referring to Fig. 3, as the software executed in the CPU unit 13, three hierarchies of a real-time OS 200, a system program 210, and a user program 236 are configured.

The real-time OS 200 is designed in accordance with a computer architecture of the CPU unit 13 to provide a basic execution environment for the microprocessor 100 to execute the system program 210 and the user program 236. This real-time OS is typically provided by a manufacturer of the PLC, a specialized software company or the like.

The system program 210 is a software group to provide a function as the PLC 1. Specifically, the system program 210 includes a scheduler program 212, an output processing program 214, an input processing program 216, a sequence-instruction arithmetic operation program 232, a motion arithmetic operation program 234, and another system program 220. Generally, since the output processing program 214 and the input processing program 216 are continuously (integrally) executed, these programs may be collectively referred to as an IO processing program 218.

The user program 236 is created in accordance with a control purpose in a user. That is, the user program 236 is a program arbitrarily designed in accordance with an object line (process) to be controlled using the PLC system SYS, or the like.

As will be described later, the user program 236 cooperates with the sequence-instruction arithmetic operation program 232 and the motion arithmetic operation program 234 to implement the control purpose in the user. That is, the user program 236 utilizes instructions, functions, functional modules and the like provided by the sequence-instruction arithmetic operation program 232 and the motion arithmetic operation program 234 to thereby implement programmed operation. Thus, the user program 236, the sequence-instruction arithmetic operation program 232, and the motion arithmetic operation program 234 may be collectively referred to as a control program 230.

In this manner, the microprocessor 100 of the CPU unit 13 executes the system program 210 and the user program 236 stored in the storage means.

Hereinafter, the respective programs will be described in more detail.
The user program 236 is created in accordance with the control purpose in the user (e.g., the object line or process) as described above. The user program 236 is typically in an object program format executable in the microprocessor 100 of the CPU unit 13. This user program 236 is generated in the PLC support apparatus 8 or the like by compiling a source program described in a ladder language or the like. The generated user program 236 in the object program format is forwarded from the PLC support apparatus 8 to the CPU unit 13 through the connection cable 10 to be stored in the non-volatile memory 106 or the like.

The scheduler program 212 controls processing start in each execution cycle and processing restart after processing interruption with respect to the output processing program 214, the input processing program 216 and the control program 230. More specifically, the scheduler program 212 controls the execution of the user program 236 and the motion arithmetic operation program 234.

The output processing program 214 rearranges the output data generated by the execution of the user program 236 (the control program 230) into a format appropriate for forwarding the same to the PLC system bus controller 120 and/or the field network controller 140. When the PLC system bus controller 120 and the field network controller 140 each need a command to execute the transmission from the microprocessor 100, the output processing program 214 issues the command.

The input processing program 216 rearranges the input data received by the PLC system bus controller 120 and/or the field network controller 140 into a format appropriate for the use by the control program 230.

The sequence-instruction arithmetic operation program 232 is a program that is called when a certain type of sequence instruction to be used in the user program 236 is executed, and is executed to implement a content of the instruction.

The motion arithmetic operation program 234 is a program that is executed in accordance with a command by the user program 236 to calculate the command values outputted to the motor driver such as the servo motor driver 3 and the pulse motor driver.

The other system program 220 collectively indicates a program group to implement various functions of the PLC 1 other than the programs shown individually in Fig. 3. The other system program 220 includes a program 222 that sets a period of the motion control cycle. The period of the motion control cycle can be appropriately set in accordance with the control purpose. The program 222 that sets the period of the motion control cycle sets the system timer 108 so that the interrupt signal is generated with the period of the motion control cycle specified from the system timer 108. At the power-on of the CPU unit 13, the program 222 that sets the period of the motion control cycle is executed, by which information specifying the period of the motion control cycle is read from the non-volatile memory 106 and the system timer 108 is set in accordance with the read information.

The real-time OS 200 provides an environment to switch over and execute the plurality of programs as time advances.

### <D. Outline of Motion Control>

Next, a typical configuration included in the above-described user program 236 will be described. The user program 236 includes an instruction to cause whether or not a condition of the control start regarding the motion of the motor is established to be periodically determined. For example, it is logic in which whether or not a work to be subjected to some treatment by a driving force of the motor is conveyed up to a predetermined treatment position is determined. The user program 236 further includes an instruction to start the motion control in response to the determination of the establishment of this condition of the control start. With the start of this motion control, the execution of a motion instruction is instructed. Consequently, the motion arithmetic operation program 234 corresponding to the instructed motion instruction is activated to execute, first, initial processing necessary for calculating the command values to the motor every time the motion arithmetic operation program 234 is executed. Moreover, in the same motion control cycle as that of the initial processing, the command values in a first cycle are calculated. Accordingly, the initial processing and the first command value calculating processing are processing for the activated motion arithmetic operation program 234 to perform in the first execution. Hereinafter, the command values in each cycle are sequentially calculated.

### <E. Outline of Synchronization Control>

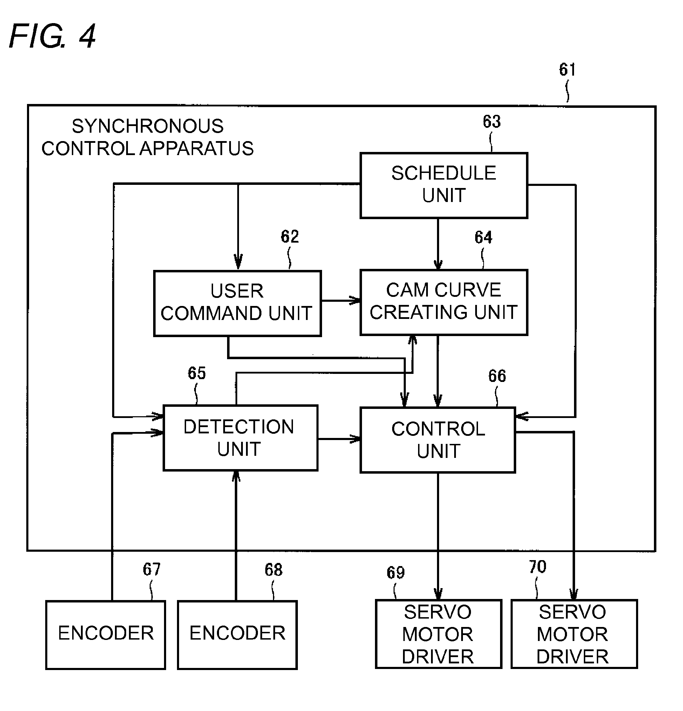

Fig. 4 is a diagram showing a configuration of a synchronization control apparatus.

As shown in Fig. 4, a synchronization control apparatus 61 includes a user command unit 62, a schedule unit 63, a cam curve creating unit 64, a detection unit 65, and a control unit 66. These components are implemented by the control program 230, the program 222 that sets the period of the motion control cycle, and the scheduler program 212.

The schedule unit 63 controls timing of the control period, the user command unit 63, and timing of the overall synchronization processing. The schedule unit 63 causes a driven shaft to perform operation of catching up a main shaft (hereinafter, referred to as catching-up operation) at timing earlier than a synchronization start point.

The user command unit 62 inputs the command values, specified by the user, of a synchronization-start main shaft position SPM, a synchronization-start driven shaft position SPD, a gear ratio GR, a target velocity VTD during the catching-up operation, a target acceleration ATD, and a target deceleration BTD to reflect the same on processing of the cam curve creating unit 64 and the control unit 66 at command timing of the schedule unit 63. The synchronization-start main shaft position SPM and the synchronization-start driven shaft position SPD indicate a position of the main shaft and a position of the driven shaft at a point when the driven shaft and the main shaft become synchronous. Moreover, the user command unit 62 instructs the start of the synchronization control.

The detection unit 65 detects the position of the main shaft, the position of the driven shaft, a velocity of the main shaft, and a velocity of the driven shaft, based on count values of pulses from an encoder 67 for the main shaft, and an encoder 68 for the driven shaft.

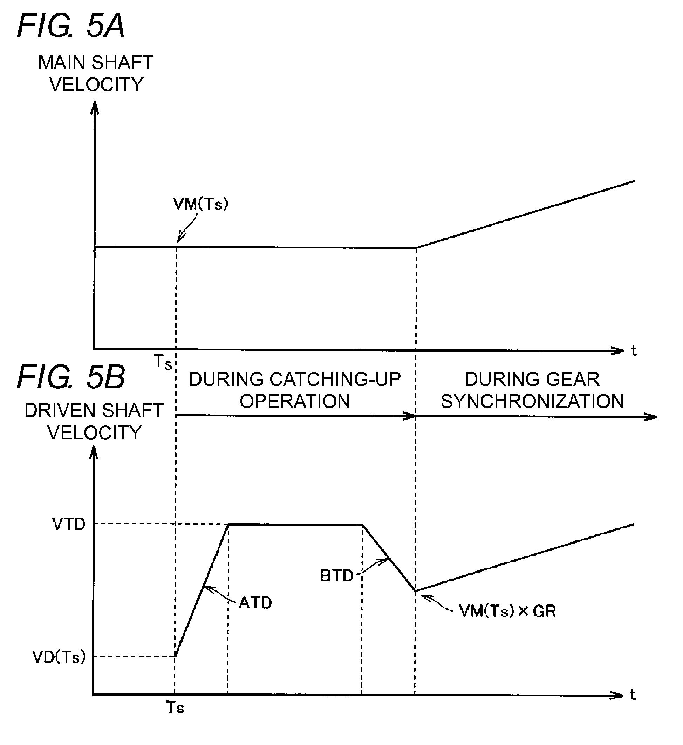

The cam curve creating unit 64 calculates a velocity obtained by multiplying a velocity of the main shaft VM (Ts) at the start time of catching-up operation by the gear ratio GR as a velocity at the start time of gear synchronization. The cam curve creating unit 64 creates a cam curve shown in Figs. 5A and 5B, using the target velocity VTD, the target acceleration ATD, the target deceleration BTD and a velocity of the driven shaft VD (Ts) at the start time of catching-up operation, and the calculated velocity at the start time of gear synchronization.

In the present embodiment, the cam curve indicates the velocity of the driven shaft to displacement with time.

During the catching-up operation, the control unit 66 calculates the velocity command value and the position command value to the driven shaft in each control period, based on the cam curve and position information of the main shaft (specifically, a movement amount from the catching-up operation start) to output the resultant to servo motor driver 70 for the driven shaft. During the synchronization control after catching-up operation ends, the control unit 66 calculates the velocity command value and the position command value to the driven shaft in each control period, based on the velocity of the main shaft and the gear ratio to output the resultant to the servo motor driver 70 for the driven shaft.

### (Operation of synchronization control)

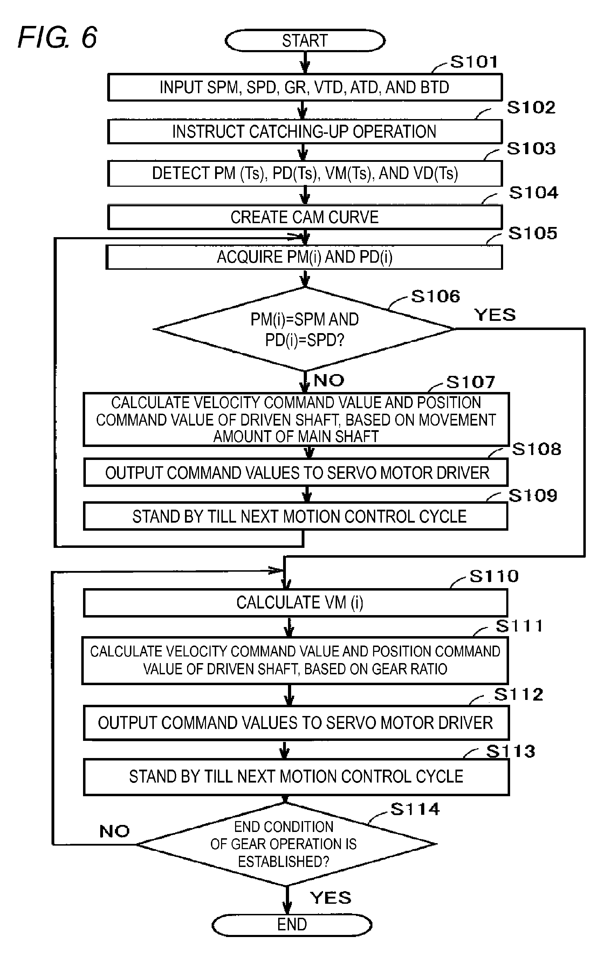

Fig. 6 is a flowchart showing an operation procedure of the synchronization control of the first embodiment.

First, the user command unit 62 inputs the command values of the synchronization-start main shaft position SPM, the synchronization-start driven shaft position SPD, the gear ratio GR, the target velocity VTD, the target acceleration ATD, and the target deceleration BTD, which are specified by the user (step S101).

Next, the schedule unit 63 instructs the start of the catching-up operation of the driven shaft (step S102).

At a time point Ts when the start is instructed, the detection unit 65 acquires the count value (position) of the pulse from the encoder 67 for the main shaft as a position of the main shaft PM (Ts) to calculate the velocity of the main shaft VM (Ts) from time differentiation (time difference) of the acquired count value. Moreover, at the time point Ts when the start is instructed, the detection unit 65 acquires the count value (position) of the pulse from the encoder 68 for the driven shaft as a position of the driven shaft PD (Ts) to calculate the velocity of the driven shaft VD (Ts) from time differentiation (time difference) of the acquired count value (step S103).

Next, the cam curve creating unit 64 creates the cam curve (velocity profile) as shown in Figs. 5A and 5B, using the target velocity VTD, the target acceleration ATD, the target deceleration BTD, the velocity of the driven shaft VD (Ts) at the start time of catching-up operation, and the velocity obtained by multiplying the velocity of the main shaft VM (Ts) at the start time of catching-up operation by the gear ratio GR (step S104).

The detection unit 65 acquires the count value (position) of the pulse from the encoder 67 for the main shaft as a position of the main shaft PM (i). Moreover, the detection unit 65 acquires the count value (position) of the pulse from the encoder 68 for the driven shaft as a position of the driven shaft PD (i) (step S105).

If a condition that the detected position of the main shaft PM (i) is the same as the synchronization-start main shaft position SPM and the detected position of the driven shaft PD (i) is the same as the synchronization-start driven shaft position SPD is not satisfied (NO in step S106), the schedule unit 63 continues the catching-up operation in the following steps.

The control unit 66 calculates the velocity command value and the position command value of the driven shaft in the current motion control period, based on the cam curve and the movement amount of the main shaft (PM (i)-PM (Ts)) from the catching-up operation start. Specifically, when the movement amount of the main shaft is P, the control unit 66 calculates, as the velocity command value of the driven shaft, the velocity of the driven shaft when a value obtained by integrating the cum curve is P. Furthermore, the control unit 66 integrates the velocity command value of the driven shaft to set an integrated value as the position command value of the driven shaft (step S107).

The control unit 66 outputs the velocity command value and the position command value to the servo motor driver 70 for the driven shaft (step S108).

The schedule unit 63 gives an instruction to stand by till the next motion control cycle arrives. When the next motion control cycle arrives, "i " is incremented (step S109).

On the other hand, if the condition that the detected position of the main shaft PM (i) is the same as the synchronization-start main shaft position SPM and the detected position of the driven shaft PD (i) is the same as the synchronization-start driven shaft position SPD is satisfied (YES in step S106), the schedule unit 63 ends the catching-up operation to cause gear operation to be executed in the following steps.

The detection unit 65 acquires the count value (position) of the pulse from the encoder 67 for the main shaft to calculate a velocity of the main shaft VM (i) from time differentiation (time difference) of the acquired count value (step S110).

The control unit 66 calculates the velocity command value of the driven shaft by multiplying the detected velocity of the main shaft VM (i) by the gear ratio GR. Furthermore, the control unit 66 integrates the velocity command value of the driven shaft to set an integrated value as the position command value of the driven shaft (step S111).

The control unit 66 outputs the velocity command value and the position command value to the servo motor driver 70 for the driven shaft (step S112).

The schedule unit 63 gives an instruction to stand by till the next motion control cycle arrives (step S113).

The schedule unit 63 allows the gear operation in steps S110 to S113 to be continued until an end condition of the gear operation is established (YES in step S114).

As described above, in the present embodiment, the "catching-up operation" is implemented in the synchronization operation using the cum curve, and after the synchronization start position, the synchronization operation using the gear ratio is performed, and thus, even if the velocity of the main shaft is changed during the "catching-up operation" of the driven shaft, the velocity of the driven shaft is changed in synchronization with the velocity of the main shaft, thereby enabling the synchronization to be started at the synchronization start position. It is assured to enable secure shift to a synchronization state (start of the gear operation) at the "synchronization-start main shaft position" and the "synchronization-start driven shaft position".

### [Second Embodiment]

In a second embodiment, a description of a method of embodying a method for synchronizing the main shaft and the driven shaft at the specified position when the velocity of the main shaft is changed from that during the catching-up operation will be given.

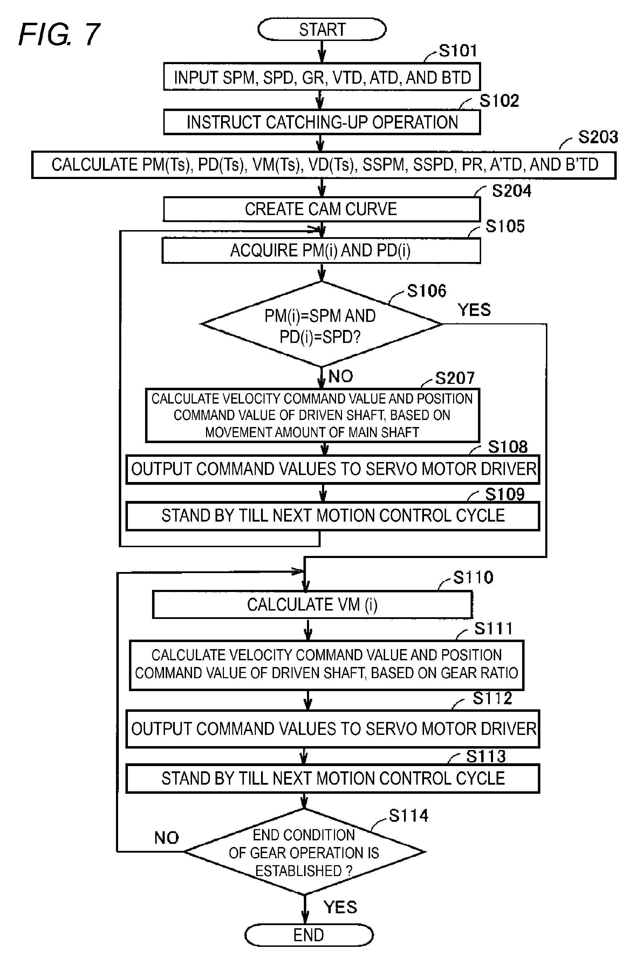

Fig. 7 is a flowchart showing an operation procedure of synchronization control of the second embodiment.
First, the user command unit 62 inputs the command values of the synchronization-start main shaft position SPM, the synchronization-start driven shaft position SPD, the gear ratio GR, the target velocity VTD, the target acceleration ATD, and the target deceleration BTD, which are specified by the user (step S101).

Next, the schedule unit 63 instructs the start of the catching-up operation of the driven shaft (step S102).

At the time point Ts when the start is instructed, the detection unit 65 acquires the count value (position) of the pulse from the encoder 67 for the main shaft as the position of the main shaft PM (Ts) to calculate the velocity of the main shaft VM (Ts) from time differentiation (time difference) of the acquired count value. Moreover, at the time point Ts when the start is instructed, the detection unit 65 acquires the count value (position) of the pulse from the encoder 68 for the driven shaft as the position of the driven shaft PD (Ts) to calculate the velocity of the driven shaft VD (Ts) from time differentiation (time difference) of the acquired count value.

The control unit 66 calculates a movement amount of the main shaft SSPM until the synchronization start from the synchronization-start main shaft position SPM and the position of the main shaft PM (Ts), and a movement amount of the driven shaft SSPD until the synchronization start from the synchronization-start driven shaft position SPD and the position of the driven shaft PD (Ts). The control unit 66 calculates a movement amount ratio PR by dividing the movement amount of the driven shaft SSPD by the movement amount of the main shaft SSPM.

Furthermore, the control unit 66 specifies a synchronization start time point Te from the velocity of the main shaft VM (Ts) and the movement amount of the main shaft SSPM until the synchronization start. The control unit 66 further corrects the values of the target acceleration ATD and the target deceleration BTD to ATD' and BTD', respectively, while maintaining the target velocity VTD so that the driven shaft moves by the movement amount SSPD until the synchronization start time point Te (step S203).

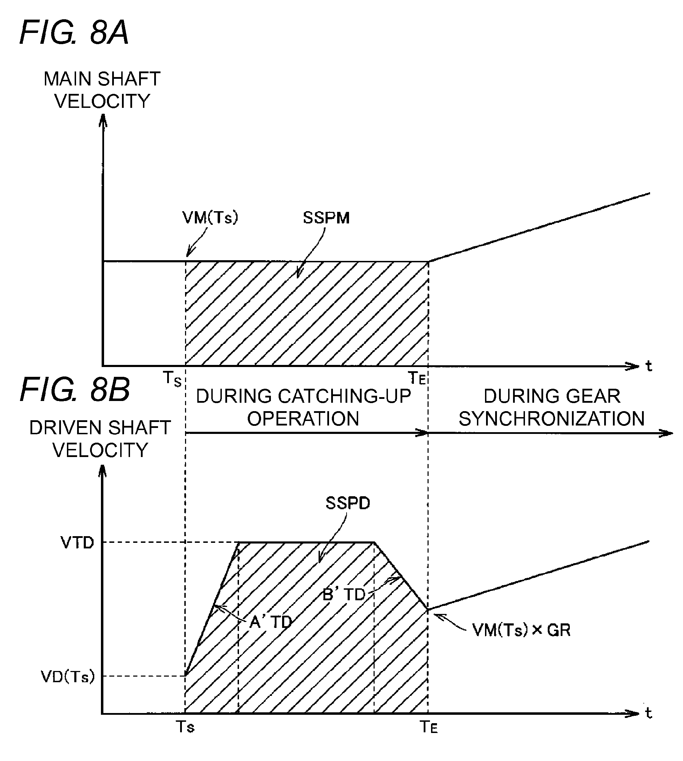

Next, the cum curve creating unit 64 creates a cam curve (velocity profile) as shown in Figs. 8A and 8B, using the target velocity VTD, the target acceleration ATD', the target deceleration BTD', the velocity of the driven shaft VD (Ts) at the start time of catching-up operation, and the velocity obtained by multiplying the velocity of the main shaft VM (Ts) at the start time of catching-up operation by the gear ratio GR (step S204).

The detection unit 65 acquires the count value (position) of the pulse from the encoder 67 for the main shaft as the position of the main shaft PM (i). Moreover, the detection unit 65 acquires the count value (position) of the pulse from the encoder 68 for the driven shaft as the position of the driven shaft PD (i) (step S105).

If the condition that the detected position of the main shaft PM (i) is the same as the synchronization-start main shaft position SPM and the detected position of the driven shaft PD (i) is the same as the synchronization-start driven shaft position SPD is not satisfied (NO in step S106), the schedule unit 63 continues the catching-up operation in the following steps.

The control unit 66 calculates the velocity command position and the position command value of the driven shaft in the current motion control period, based on the cam curve and the movement amount of the main shaft (PM (i) - PM (Ts)) from the catching-up operation start. Specifically, the control unit 66 calculates, as the velocity command value of the driven shaft, the velocity of the driven shaft when the value obtained by integrating the cum curve is P×PR. Furthermore, the control unit 66 integrates the velocity command value of the driven shaft to set an integrated value as the position command value of the driven shaft (step S207).

The control unit 66 outputs the velocity command value and the position command value to the servo motor driver 70 for the driven shaft (step S108).

The schedule unit 63 gives an instruction to stand by till the next motion control cycle arrives. When the next motion control cycle arrives, "i" is incremented (step S109).

On the other hand, if the condition that the detected position of the main shaft PM (i) is the same as the synchronization-start main shaft position SPM and the detected position of the driven shaft PD (i) is the same as the synchronization-start driven shaft position SPD is satisfied (YES in step S106), the schedule unit 63 ends the catching-up operation to cause the gear operation to be executed in the following steps.

The detection unit 65 acquires the count value (position) of the pulse from the encoder 67 for the main shaft to calculate the velocity of the main shaft VM (i) from time differentiation (time difference) of the acquired count value (step S110).

The control unit 66 calculates the velocity command value of the driven shaft by multiplying the detected velocity of the main shaft VM (i) by the gear ratio GR. Furthermore, the control unit 66 integrates the velocity command value of the driven shaft to set the integrated value as the position command value of the driven shaft (step S111).

The control unit 66 outputs the velocity command value and the position command value to the servo motor driver 70 for the driven shaft (step S112).

The schedule unit 63 gives an instruction to stand by till the next motion control cycle arrives (step S113).

The schedule unit 63 allows the gear operation in steps S110 to S113 to be continued until the end condition of the gear operation is established (YES in step S114).

By the above-described operation, when the velocity of the main shaft is not changed from the velocity VM (Ts) at the start time of catching-up operation, the movement amount of the main shaft becomes SSPM and the movement amount of the driven shaft becomes SSPD at the time point Te, so that the synchronization is started after the time point Te.

On the other hand, when the velocity of the main shaft is changed to be faster than the velocity VM (Ts) at the start time of catching-up operation, the movement amount of the main shaft becomes SSPM and the movement amount of the driven shaft becomes SSPD at a time point Ta before the time point Te, so that the synchronization is started after the time point Ta.

When the velocity of the main shaft is changed to be slower than the velocity VM (Ts) at the start time of catching-up operation, the movement amount of the main shaft becomes SSPM and the movement amount of the driven shaft becomes SSPD at a time point Tb after the time point Te, so that the synchronization is started after the time point Tb.

The present invention is not limited to the above embodiments, but for example, includes the following modifications as well.

### [Modification 1]

While in the present embodiment, as shown in the figures, the cam curve indicates that the velocity accelerates linearly, and then becomes constant, and further decelerates, the present invention is not limited thereto. As the cam curve, for example, a cycloid curve, a trapecloid curve generally known or the like may be used. As literature examples of the cam curve, "Cam Design and Manufacturing Handbook Second Edition" (by Robert L. Norton, INDUSTRIAL PRESS INC 2009)", "Practical Cam Mechanics for Mechanical Engineers (by Nishioka Masao, Nikkan Kogyo Shinbun, Ltd. 2003) and the like are cited. Moreover, the cam curve may be expressed by a polynomial.

### [Modification 2]

When the synchronization-start driven shaft position exists in a reverse direction to a rotation direction of the main shaft, in the catching-up operation, the driven shaft operates in the reverse direction to the main shaft in accordance with the foregoing cam curve, and after the synchronization start, the driven shaft operates in the rotation direction of the main shaft.

### [Modification 3]

Even when the main shaft has some trouble during the catching-up operation, thereby stopping, or even when a stop command is issued to the main shaft, the driven shaft keeps a state where the synchronization relation is continued in accordance with the foregoing cam curve.

### [Modification 4]

When the synchronization-start main shaft position or the synchronization-start driven shaft position goes beyond one circuit of a position counter, the user program may be informed of the abnormality as an alarm, or the user may be enabled to specify multi-rotation.

For example, when the position counter indicates 0 to 360 deg, if the 720 deg is specified as the synchronization-start main shaft position from the user program, the abnormality may be informed to the user program or the start of the synchronization from 0 deg after two rotations may be enabled to be specified.

### [Modification 5]

When during the catching-up operation, the velocity of the main shaft is largely changed, and exceeds a threshold specified in advance in Figs. 5A and 5B, if the velocity of the main shaft at this time point is VM (Ts1), the target velocity of the driven shaft at the synchronization start position may be changed from VM (Ts)×GR to VM (Ts1)×GR to again perform the arithmetic operation of the cam curve.

The embodiments disclosed here should be considered to be illustrative in all the points, and not limitative. It is intended that the scope of the present invention is indicated not by the above description but by the scope of claims, and all modifications within meanings and the scope equivalent to the scope of claims are included.

## Claims

1. A synchronization control apparatus for executing synchronization control of a main shaft and a driven shaft in each of a plurality of control periods, the synchronization control apparatus comprising:
a specification unit for specifying a synchronization start position where the main shaft and the driven shaft start synchronization;
a cam curve creating unit for creating a cam curve;
a detection unit for detecting position information of the main shaft in each control period; and
a control unit for calculating a velocity command value applied to the driven shaft in each control period up to the synchronization start position, based on the cam curve and the position information of the main shaft, and calculating the velocity command value applied to the driven shaft in each control period after the synchronization start position, based on a gear ratio between the main shaft and the driven shaft,
wherein the control unit is adapted to control the driven shaft with the calculated velocity command value.

2. The synchronization control apparatus according to claim 1, wherein the cam curve creating unit is adapted to create the cam curve in a time period up to the synchronization start position, based on a specified target acceleration, target deceleration, and target velocity.

3. A synchronization control method of executing synchronization control of a main shaft and a driven shaft in each of a plurality of control periods, the method comprising the steps of:
specifying a synchronization start position where the main shaft and the driven shaft start synchronization;
creating a cam curve;
detecting position information of the main shaft in each control period;
calculating a velocity command value applied to the driven shaft in each control period up to the synchronization start position, based on the cam curve and the position information of the main shaft, and calculating the velocity command value applied to the driven shaft in each control period after the synchronization start position, based on a gear ratio between the main shaft and the driven shaft; and
controlling the driven shaft with the calculated velocity command value.

4. A synchronization control program that causes a computer to execute synchronization control of a main shaft and a driven shaft in each of a plurality of control periods, the computer executing the steps of:
specifying a synchronization start position where the main shaft and the driven shaft start synchronization;
creating a cam curve,
detecting position information of the main shaft in each control period;
calculating a velocity command value applied to the driven shaft in each control period up to the synchronization start position, based on the cam curve and the position information of the main shaft, and calculating the velocity command value applied to the driven shaft in each control period after the synchronization start position, based on a gear ratio between the main shaft and the driven shaft; and
controlling the driven shaft with the calculated velocity command value.

5. A computer-readable recording medium storing a synchronization control program that causes a computer to execute synchronization control of a main shaft and a driven shaft in each of a plurality of control periods, causing the computer to execute the steps of:
specifying a synchronization start position where the main shaft and the driven shaft start synchronization;
creating a cam curve;
detecting position information of the main shaft in each control period;
calculating a velocity command value applied to the driven shaft in each control period up to the synchronization start position, based on the cam curve and the position information of the main shaft, and calculating the velocity command value applied to the driven shaft in each control period after the synchronization start position, based on a gear ratio between the main shaft and the driven shaft; and
controlling the driven shaft with the calculated velocity command value.
